(19) Europäisches Patentamt
European Patent Office
Office européen des brevets

(11) **EP 3 270 451 B1**

(12) **EUROPEAN PATENT SPECIFICATION**

(45) Date of publication and mention
of the grant of the patent:
**30.10.2019 Bulletin 2019/44**

(51) Int Cl.:
*C02F 3/00* *(2006.01)*    *C02F 3/30* *(2006.01)*
*H01M 8/04858* *(2016.01)*    *H01M 8/10* *(2016.01)*
*H01M 8/16* *(2006.01)*    *C02F 3/34* *(2006.01)*

(21) Application number: **16761325.6**

(22) Date of filing: **10.03.2016**

(86) International application number:
**PCT/JP2016/001354**

(87) International publication number:
**WO 2016/143352 (15.09.2016 Gazette 2016/37)**

(54) **MICROBIAL FUEL CELL SYSTEM**

MIKROBIELLES BRENNSTOFFZELLENSYSTEM

SYSTÈME DE PILE À COMBUSTIBLE MICROBIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2015 JP 2015048232**

(43) Date of publication of application:
**17.01.2018 Bulletin 2018/03**

(73) Proprietor: **Panasonic Corporation
Kadoma-shi, Osaka 571-0051 (JP)**

(72) Inventors:
• **SUZUKI, Yuya**
**Osaka-shi,**
**OSAKA, 540-6207 (JP)**
• **YOSHIKAWA, Naoki**
**Osaka-shi**
**OSAKA 540-6207 (JP)**
• **KITADE, Yuuki**
**Osaka-shi**
**OSAKA 540-6207 (JP)**
• **KAMAI, Ryo**
**Osaka-shi**
**OSAKA 540-6207, (JP)**

(74) Representative: **Müller-Boré & Partner
Patentanwälte PartG mbB
Friedenheimer Brücke 21
80639 München (DE)**

(56) References cited:
JP-A- 2006 081 963    JP-A- 2009 158 426
JP-A- 2015 033 681    JP-A- 2016 087 497
US-A1- 2010 304 226    US-A1- 2010 304 226
US-A1- 2011 183 159    US-A1- 2013 112 601
US-A1- 2014 255 729

• VIRDIS B ET AL: "Simultaneous nitrification, denitrification and carbon removal in microbial fuel cells", WATER RESEARCH, ELSEVIER, AMSTERDAM, NL, vol. 44, no. 9, 21 February 2010 (2010-02-21), pages 2970-2980, XP027016250, ISSN: 0043-1354 [retrieved on 2010-02-21]
• VIRDIS B ET AL: "Microbial fuel cells for simultaneous carbon and nitrogen removal", WATER RESEARCH, ELSEVIER, AMSTERDAM, NL, vol. 42, no. 12, 8 April 2008 (2008-04-08), pages 3013-3024, XP022709897, ISSN: 0043-1354, DOI: 10.1016/J.WATRES.2008.03.017 [retrieved on 2008-04-08]
• FEI ZHANG ET AL: "Simultaneous nitrification and denitrification with electricity generation in dual-cathode microbial fuel cells", JOURNAL OF CHEMICAL TECHNOLOGY AND BIOTECHNOLOGY, WILEY, vol. 87, no. 1, 7 November 2011 (2011-11-07), pages 153-159, XP001571072, ISSN: 0268-2575, DOI: 10.1002/JCTB.2700 [retrieved on 2011-11-07]

**Description**

The present invention relates to a microbial fuel cell system.

An apparatus capable of simultaneously treating, nitrifying, and denitrifying organic matter contained in a liquid to be treated in a single tank is known (for example, refer to Patent Literature 1).

CITATION LIST

PATENT LITERATURE

Patent Literature 1: Japanese Unexamined Patent Application Publication No. H10-085787

US 2010/304226 A1 discloses a microbial fuel cell.

Water Research, Volume 44, No. 9, 2010, pages 2970-2980, discloses simultaneous nitrification, denitrification and carbon removal in microbial fuel cells.

The conventional apparatus capable of simultaneously treating, nitrifying, and denitrifying organic matter contained in the liquid to be treated in the single tank, has a problem that the treatment of the organic matter only depends on the denitrification, which limits the amount of the organic matter to be treated depending on the amount of nitrogen contained in the liquid.

The present invention provides a microbial fuel cell system capable of simultaneously treating, nitrifying, and denitrifying organic matter contained in a liquid to be treated with no limitation by the amount of nitrogen contained in the liquid, and also capable of generating electric power in association with the treatment, nitrification, and denitrification of the organic matter.

A microbial fuel cell system according to an aspect of the present invention includes: a supply-drain compartment to which an electrolysis solution is supplied and from which the electrolysis solution is drained; a negative electrode soaked in the electrolysis solution and holding electricity-producing bacteria on a surface thereof; and a positive electrode soaked in the electrolysis solution, including at least a part exposed to a gas phase, and holding nitrifying bacteria on a surface thereof excluding the part exposed to the gas phase, the positive electrode being a gas diffusion electrode including a water-repellent layer and a gas diffusion layer in contact with the water-repellent layer, wherein the water-repellent layer is in contact with the gas phase. At least one of the surface of the positive electrode excluding the part exposed to the gas phase and the electrolysis solution holds denitrifying bacteria. The denitrifying bacteria held in the electrolysis solution are collected around the positive electrode.

Fig. 1 is a schematic view illustrating a microbial fuel cell system according to an embodiment of the present invention.
Fig. 2 is a schematic view showing a reaction region adjacent to a positive electrode.
Fig. 3 is a schematic view showing a configuration of the positive electrode in the microbial fuel cell system.
Fig. 4 is a perspective view illustrating a microbial fuel cell system according to another embodiment of the present invention.
Fig. 5 is a cross-sectional view taken along line A-A in Fig. 4.
Fig. 6 is an exploded perspective view showing an electrode assembly, a cassette substrate, and a plate member in the microbial fuel cell system.
Fig. 7 is a perspective view illustrating another example of a microbial fuel cell system according to the other embodiment of the present invention.
Fig. 8 is a cross-sectional view taken along line B-B in Fig. 7.

Microbial fuel cell systems according to embodiments will be described in detail below. It should be noted that the features in the drawings are not necessarily drawn to scale, and may be arbitrarily enlarged and positioned to improve drawing legibility.

[First embodiment]

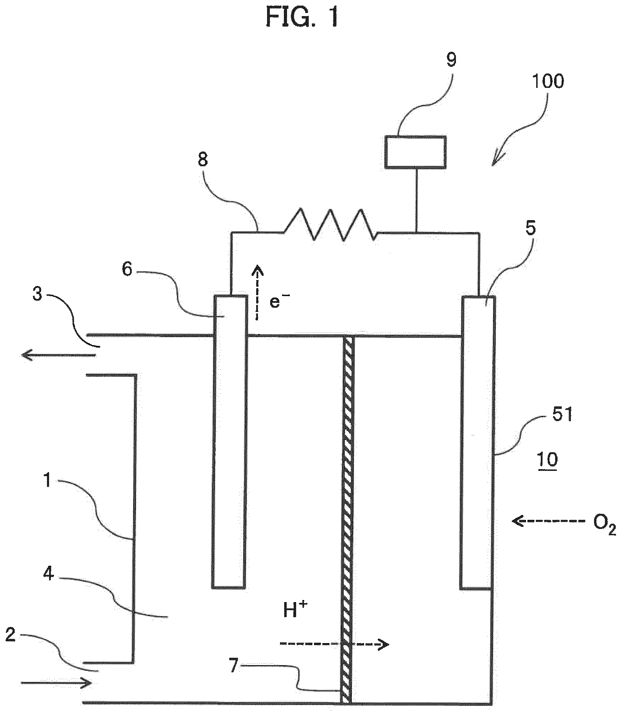

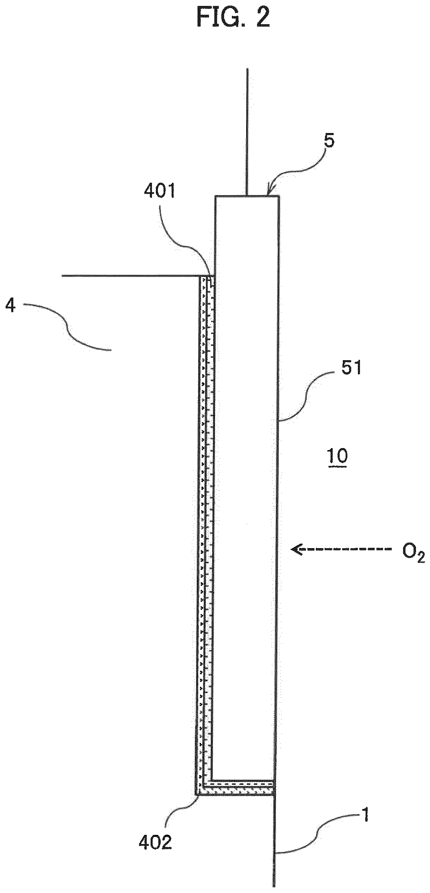

A microbial fuel cell system 100 according to the present embodiment includes a supply-drain compartment 1 serving as a single tank, as shown in Fig. 1 and Fig. 2. The supply-drain compartment 1 includes a supply port 2 and a drain port 3 for an electrolysis solution 4 as a liquid to be treated, so as to supply and drain the electrolysis solution 4 therethrough as necessary. The positions of the supply port 2 and the drain port 3 are not limited to the case shown in Fig. 1, and the supply port 2 and the drain port 3 may be located at any position that allows the electrolysis solution 4 to be supplied and drained. Although the present embodiment exemplifies the case in which the supply-drain compartment 1 includes the supply port 2 and the drain port 3, the electrolysis solution 4 may directly be supplied/drained to/from the supply-drain compartment 1 when the supply-drain compartment 1 does not include the supply port 2 or the drain port 3. Alternatively, the supply-drain compartment 1 may include a single supply-drain port serving as both the supply port 2 and the drain port 3.

The microbial fuel cell system 100 further includes a positive electrode 5, a negative electrode 6, and an ion permeable film 7 arranged between the positive electrode 5 and the negative electrode 6. Although Fig. 1 illustrates the case in which the positive electrode 5, the negative electrode 6, and the ion permeable film 7 are separated from each other, the positive electrode 5, the ion permeable film 7, and the negative electrode 6 may sequentially be stacked on one another.

The positive electrode 5 is arranged in such a manner as to be soaked in the electrolysis solution 4 held in the supply-drain compartment 1, while one surface 51 of the positive electrode 5 is exposed to a gas phase 10. The one surface 51 has water repellency and oxygen permeability. While oxygen in the gas phase 10 passes through the one surface 51, the electrolysis solution 4 permeating the positive electrode 5 does not penetrate through the one surface 51.

The negative electrode 6 is arranged in such a manner as to be soaked in the electrolysis solution 4 held in the supply-drain compartment 1. The positive electrode 5 and the negative electrode 6 are electrically connected to each other via an external circuit 8.

(Positive electrode)

The positive electrode 5 according to the present embodiment is an electrically conductive body having porosity. General examples of positive electrodes include: a carbon material such as carbon paper, carbon felt, carbon cloth, and an activated carbon sheet; and mesh of metal such as aluminum, copper, stainless steel, nickel, and titanium. In general, a positive electrode may be made of a porous or woven material so as to have porosity. The positive electrode 5 may be porous either entirely or partly.

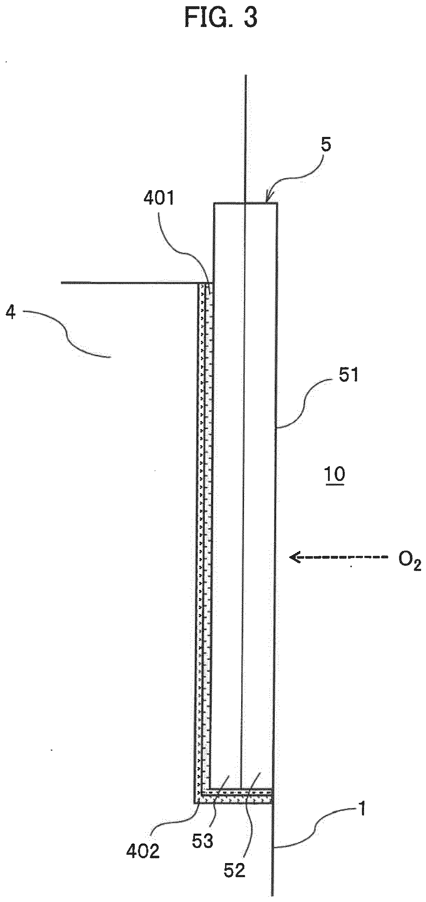

More particularly, as shown in Fig. 3, the positive electrode 5 of the microbial fuel cell system according to the present invention is a gas diffusion electrode including a water-repellent layer 52 and a gas diffusion layer 53 in contact with the water-repellent layer 52. The use of such a gas diffusion electrode having a thin plate shape facilitates the supply of oxygen in the gas phase 10 to a catalyst supported on the positive electrode 5.

The water-repellent layer 52 has both water repellency and oxygen permeability. The water-repellent layer 52 is configured to allow oxygen to move from the gas phase to the liquid phase in the electrochemical system in the microbial fuel cell system 100, while separating the gas phase from the liquid phase in a favorable state. Namely, the water-repellent layer 52 allows the oxygen in the gas phase 10 to pass therethrough to reach the gas diffusion layer 53, and at the same time, can prevent the electrolysis solution 4 from passing therethrough to reach the gas phase 10. The term "separation" as used herein refers to physical isolation.

The water-repellent layer 52 is in contact with the gas phase 10 and diffuses oxygen supplied from the gas phase 10. In the structure shown in Fig. 3, the water-repellent layer 52 supplies the oxygen substantially uniformly to the gas diffusion layer 53. The water-repellent layer 52 is therefore preferably a porous body so as to diffuse the oxygen. The water-repellent layer 52 having water repellency can prevent pores of the porous body from being clogged because of water condensation to result in a decrease in gas diffusing performance. Further, since the electrolysis solution 4 hardly permeates deeply into the water-repellent layer 52, the water-repellent layer 52 allows the oxygen to efficiently flow therethrough from the surface 51 in contact with the gas phase 10 toward the surface facing the gas diffusion layer 53.

The water-repellent layer 52 is preferably formed into a sheet-like shape formed of woven or nonwoven fabric. The water-repellent layer 52 may be formed of any material which has water repellency and diffuses the oxygen supplied from the gas phase 10. The material used for the water-repellent layer 52 may be at least one material selected from the group consisting of polyethylene, polypropylene, polybutadiene, nylon, polytetrafluoroethylene (PTFE), ethyl cellulose, poly-4-methylpentene-1, butyl rubber, and polydimethylsiloxane (PDMS). These materials can easily form the porous body and have high water repellency, so as to enhance the gas diffusing performance while preventing the pores from being clogged. The water-repellent layer 52 is preferably provided with a plurality of penetration holes in the stacking direction of the water-repellent layer 52 and the gas diffusion layer 53.

The water-repellent layer 52 may be subjected to water repellent treatment with a water repellent as necessary in order to further improve the water repellency. For example, the porous body of the water-repellent layer 52 may be coated with a water repellent such as polytetrafluoroethylene to improve the water repellency.

The gas diffusion layer 53 in the positive electrode 5 preferably includes an electrically conductive porous material and a catalyst supported on the electrically conductive material. Alternatively, the gas diffusion layer 53 may be a porous catalyst having electrical conductivity. The positive electrode 5 including the gas diffusion layer 53 described above can allow electrons generated by a local cell reaction described below to communicate between the catalyst and the external circuit 8. As described below, the catalyst supported on the gas diffusion layer 53 is an oxygen reduction catalyst. When electrons flowing through the external circuit 8 reach the catalyst supported on the gas diffusion layer 53, the catalyst can promote the oxygen reduction reaction by the oxygen, hydrogen ions, and electrons.

In order to ensure the stable performance in the positive electrode 5, the oxygen preferably efficiently passes through the water-repellent layer 52 and the gas diffusion layer 53 and is supplied to the catalyst and nitrifying bacteria. The gas diffusion layer 53 is thus preferably a porous body having numbers of fine pores through which the oxygen passes from the surface facing the water-repellent layer 52 toward the opposite surface. The gas diffusion layer 53 is preferably in the form of three-dimensional mesh. The three-dimensional mesh can provide the gas diffusion layer 53 with high oxygen permeability and electrical conductivity.

In order to efficiently supply the oxygen to the gas diffusion layer 53 in the positive electrode 5, the water-repellent layer 52 is preferably attached to the gas diffusion layer 53 with an adhesive. This allows the diffused oxygen to be supplied directly to the gas diffusion layer 53, so as to ensure the efficient oxygen reduction reaction. The adhesive is preferably at least partly applied between the water-repellent layer 52 and the gas diffusion layer 53 in order to keep the adhesion between the water-repellent layer 52 and the gas diffusion layer 53. The adhesive is more preferably entirely applied between the water-repellent layer 52 and the gas diffusion layer 53 in order to further increase the adhesion between the water-repellent layer 52 and the gas diffusion layer 53 and supply the oxygen to the gas diffusion layer 53 stably for a long period of time.

The adhesive preferably has oxygen permeability, and may include resin containing at least one material selected from the group consisting of polymethyl methacrylate, a methacrylate-styrene copolymer, styrene butadiene rubber, butyl rubber, nitrile rubber, chloroprene rubber, and silicone.

The gas diffusion layer 53 in the positive electrode 5 according to the present embodiment is described in more detail below. The gas diffusion layer 53 may include an electrically conductive porous material and a catalyst supported on the electrically conductive material, as described above.

The electrically conductive material included in the gas diffusion layer 53 may be at least one material selected from the group consisting of a carbon substance, an electrically conductive polymer, a semiconductor, and metal. The carbon substance is a substance including carbon as a component. Examples of carbon substances include: graphite; activated carbon; carbon powder such as carbon black, VULCAN (registered trademark) XC-72R, acetylene black, furnace black, and Denka black; carbon fiber such as graphite felt, carbon wool, and carbon woven fabric; a carbon plate; carbon paper; a carbon disc; carbon cloth, carbon foil; and a carbon material in which carbon particles are subjected to compression molding. Another example may be a material having a microstructure such as carbon nanotube, carbon nanohorn, and carbon nanoclusters. The electrically conductive material used in the gas diffusion layer 53 may be a metal material in the form of mesh or having a foamed body, for example.

The electrically conductive polymer is a generic term for high molecular compounds having electrical conductivity. Examples of electrically conductive polymers include polymers each including a single monomer or two or more monomers, each of which is aniline, aminophenol, diaminophenol, pyrrole, thiophene, paraphenylene, fluorene, furan, acetylene, or derivatives of these compounds. More specific examples of electrically conductive polymers include polyaniline, polyaminophenol, polydiaminophenol, polypyrrole, polythiophene, polyparaphenylene, polyfluorene, polyfuran, and polyacetylene. The electrically conductive material made of metal may be stainless steel mesh. The electrically conductive material is preferably a carbon substance in view of availability, costs, corrosion resistance, and durability.

The electrically conductive material is preferably in the form of powder or fiber. The electrically conductive material may be supported by a supporting body. The supporting body is a member that has rigidity and allows the gas diffusion electrode to have a fixed shape. The supporting body may be either a non-conductive body or an electrically conductive body. When the supporting body is a non-conductive body, examples thereof include: glass; plastics; synthetic rubber; ceramics; waterproofing or water-repellent paper; a plant piece such as a wood piece; and an animal piece such as a bone piece or a shell. Examples of supporting bodies having a porous structure include porous ceramics, porous plastics, and a sponge. When the supporting body is an electrically conductive body, examples thereof include: a carbon substance such as carbon paper, carbon fiber, and a carbon stick; metal; and an electrically conductive polymer. When the supporting body is an electrically conductive body, the supporting body may also function as a current collector obtained such that an electrically conductive material on which a carbon material is supported is provided on a surface of the supporting body.

The positive electrode 5 holds the oxygen reduction catalyst. Examples of oxygen reduction catalysts include: platinum; an alloy such as a carbon alloy, PdCo, PdNi, and PdCr; and a compound such as titanium oxide, zirconia, or a composite oxide of iridium oxide. Other examples of oxygen reduction catalysts include: a platinum-based catalyst; a carbon-based catalyst using iron or cobalt; a transition metal oxide-based catalyst such as partly-oxidized tantalum carbonitride (TaCNO) and zirconium carbonitride (ZrCNO); a carbide-based catalyst using tungsten or molybdenum; and activated carbon.

The catalyst supported on the gas diffusion layer 53 is preferably a carbon material doped with metal atoms. The metal atoms are preferably, but not limited to, atoms of at least one metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum, and gold. The carbon material including such metal atoms exhibits high performance as a catalyst particularly for enhancing the oxygen reduction reaction. The amount of the metal atoms included in the carbon material may be determined as appropriate so that the carbon material exhibits high catalytic performance.

The carbon material is preferably further doped with atoms of at least one nonmetal selected from the group consisting of nitrogen, boron, sulfur, and phosphorus. The amount of the doped nonmetal atoms may also be determined as appropriate so that the carbon material exhibits high catalytic performance.

The carbon material is obtained in a manner such that a carbon-based raw material, such as graphite or amorphous carbon, is used as a base, and the carbon-based raw material is doped with metal atoms and atoms of at least one nonmetal selected from the group consisting of nitrogen, boron, sulfur, and phosphorus.

Combinations of the doped metal atoms and nonmetal atoms used for the carbon material are selected as appropriate. Particularly, the nonmetal atoms preferably include nitrogen, and the metal atoms preferably include iron. The carbon material including these atoms can achieve significantly high catalytic activity. The nonmetal atoms may only include nitrogen. The metal atoms may only include iron.

The nonmetal atoms may include nitrogen, and the metal atoms may include at least one of cobalt and manganese. The carbon material including such atoms can also achieve significantly high catalytic activity. The nonmetal atoms may only include nitrogen. The metal atoms may only include either cobalt or manganese, or may only include cobalt and manganese.

The carbon material may have any shape. For example, the carbon material may have a particle shape or a sheet-like shape. The carbon material having a sheet-like shape may have any size, and may be a minute material. The carbon material having a sheet-like shape may be a porous material. The porous carbon material having a sheet-like shape is preferably in the form of woven or non-woven fabric. Such a carbon material can be used for the gas diffusion layer 53 with no electrically conductive material included.

The carbon material serving as a catalyst in the gas diffusion layer 53 may be prepared as described below. First, a mixture of a nonmetal compound including at least one nonmetal selected from the group consisting of nitrogen, boron, sulfur, and phosphorus, a metal compound, and a carbon-based raw material, is prepared. Thereafter, the mixture is heated at a temperature from 800°C or higher to 1000°C or lower for from 45 seconds or longer to shorter than 600 seconds to yield the carbon material serving as a catalyst.

As described above, graphite or amorphous carbon may be used for the carbon-based raw material. The metal compound may be any compound that includes metal atoms capable of being coordinated with nonmetal atoms doped to the carbon-based raw material. The metal compound may be at least one compound selected from the group consisting of: an inorganic metal salt such as metal chloride, nitrate, sulfate, bromide, iodide, and fluoride; an organic metal salt such as acetate; a hydrate of an inorganic metal salt; and a hydrate of an organic metal salt. When graphite is doped with iron, for example, the metal compound preferably includes iron(III) chloride. When graphite is doped with cobalt, the metal compound preferably includes cobalt chloride. When the carbon-based raw material is doped with manganese, the metal compound preferably includes manganese acetate. The amount of the metal compound used is preferably determined, for example, such that the metal atoms are present in the metal compound in an amount of from 5% to 30% by mass, more preferably from 5% to 20% by mass, with respect to the carbon-based raw material.

The nonmetal compound preferably includes at least one nonmetal selected from the group consisting of nitrogen, boron, sulfur, and phosphorus, as described above. The nonmetal compound may be at least one compound selected from the group consisting of pentaethylenehexamine, ethylenediamine, tetraethylenepentamine, triethylenetetramine, ethylenediamine, octylboronic acid, 1,2-bis(diethylphosphino)ethane, triphenyl phosphite, and benzyl disulfide. The amount of the nonmetal compound used is determined as appropriate depending on the amount of the doped nonmetal atoms applied to the carbon-based raw material. The amount of the nonmetal compound used is preferably determined such that a molar ratio of the metal atoms in the metal compound and the nonmetal atoms in the nonmetal compound is in the range from 1:1 to 1:2, more preferably in the range from 1:1.5 to 1:1.8.

When the carbon material serving as a catalyst is prepared, the mixture of the nonmetal compound, the metal compound, and the carbon-based raw material may be obtained as described below. First, the carbon-based raw material, the metal compound, and the nonmetal compound are mixed, and a solvent such as ethanol is added to the mixture as necessary, so as to adjust the total mixture amount. These materials are dispersed by an ultrasonic dispersion method. The dispersed product is heated at an appropriate temperature (for example, 60°C), and then dried so as to remove the solvent to yield the mixture including the nonmetal compound, the metal compound, and the carbon-based raw material.

Subsequently, the mixture thus obtained is heated under a reduction atmosphere or an inert gas atmosphere. The carbon-based raw material is thus doped with the nonmetal atoms, and further doped with the metal atoms when the nonmetal atoms and the metal atoms are coordinated with each other. The heating temperature is preferably in the range from 800°C or higher to 1000°C or lower, and the heating time is preferably in the range from 45 seconds or longer to less than 600 seconds. Since the heating time is short, the carbon material is produced efficiently, and the catalytic activity of the carbon material is further enhanced. The heating rate of the mixture at the beginning of heating in the heating process is preferably 50°C/second. This rapid heating further increases the catalytic activity of the carbon material.

The carbon material may further be subjected to acid cleaning. For example, the carbon material may be dispersed in pure water with a homogenizer for 30 minutes, added in 2M sulfuric acid, and then stirred at 80°C for 3 hours. This process minimizes elution of the metal components from the carbon material.

The production method described above allows the carbon material to have high electrical conductivity in which the amounts of an inert metal compound and metal crystals are significantly reduced.

The catalyst may be bound to the electrically conductive material with a binding agent in the gas diffusion layer 53. Namely, the catalyst may be supported on the surface of the electrically conductive material and the inside of the fine pores by use of a binding agent. Accordingly, the catalyst can be prevented from being desorbed from the electrically conductive material, so as to prevent a decrease in the oxygen reduction performance. The binding agent may include at least one material selected from the group consisting of polytetrafluoroethylene, polyvinylidene fluoride (PVDF), and an ethylene-propylene-diene copolymer (EPDM). As the binding agent, Nafion (registered trademark) may also preferably be used.

The positive electrode 5 according to the present embodiment holds on the surface thereof nitrifying bacteria which are aerobic microorganisms. Examples of nitrifying bacteria include Nitrosomonas, Nitrosococcus, Nitrosospira, Nitrobacter, and Nitrospira.

The surface of the positive electrode 5 excluding the part exposed to the gas phase and the electrolysis solution 4 hold denitrifying bacteria which are anaerobic microorganisms. Examples of denitrifying bacteria include Pseudomonas, Bacillus, Paracoccus, and Achromobacter. Although the present embodiment exemplifies the case in which the surface of the positive electrode 5 and the electrolysis solution 4 both hold the denitrifying bacteria, either the surface of the positive electrode 5 or the electrolysis solution 4 may hold the denitrifying bacteria.

The nitrifying reaction and the denitrifying reaction caused in and around the positive electrode 5 are as follows:

[Nitrifying reaction]

$$[\text{Equation 1}] \ 2NH_4^+ + 3O_2 \rightarrow 2NO_2^- + 2H_2O + 4H^+$$

$$[\text{Equation 2}] \ 2NO_2^- + O_2 \rightarrow 2NO_3^-$$

[Denitrifying reaction]

$$[\text{Equation 3}] \ NO_3^- + 2H^+ + 2e^- \rightarrow NO_2^- + H_2O$$

$$[\text{Equation 4}] \ 2NO_2^- + 6H^+ + 6e^- \rightarrow N_2 + 2H_2O + 2OH^-$$

As expressed by Equation 1 and Equation 2, the positive electrode 5 in the microbial fuel cell system 100 according to the present embodiment induces the nitrifying reaction due to the catalytic action of the nitrifying bacteria when oxygen is supplied to the positive electrode 5 through the one surface 51 exposed to the gas phase. The denitrifying bacteria held in the electrolysis solution 4 are collected around the positive electrode 5 to act as a catalyst.

Nitrite ions generated by the reaction expressed as Equation 1 and nitrate ions generated by the reaction expressed as Equation 2 react with hydrogen ions derived from organic matter to induce the denitrifying reaction due to the catalytic action of the denitrifying bacteria, as expressed as Equation 3 and Equation 4, respectively. The hydrogen ions derived from organic matter are generated by the oxidation reaction of the organic matter in association with metabolism of microorganisms supported on the negative electrode 6. The carbon contained in the organic matter results in other organic matter, carbon dioxide, and metabolites of microorganisms.

Equation 1 and Equation 2 represent the reactions due to the catalytic action of the nitrifying bacteria which are aerobic microorganisms, and Equation 3 and Equation 4 represent the reactions due to the catalytic action of the denitrifying bacteria which are anaerobic microorganisms. The oxygen supplied from the one surface 51 is consumed by the reactions expressed as Equation 1 and Equation 2 in the positive electrode 5 and in a first region 401 of the electrolysis solution 4 adjacent to the positive electrode 5. As a result, a second region 402 of the electrolysis solution 4, which is located adjacent to the region in which the reactions expressed as Equation 1 and Equation 2 are caused and away from the positive electrode 5, is kept in an anaerobic state, so as to induce the reactions expressed as Equation 3 and Equation 4.

(Negative electrode)

The negative electrode 6 according to the present embodiment supports microorganisms described below and has a function to generate hydrogen ions and electrons from organic matter contained in the electrolysis solution 4 due to the catalysis of the microorganisms. The negative electrode 6 according to the present embodiment may be any negative electrode that has the configuration described above.

The negative electrode 6 includes an electrically conductive material. Specific examples of electrically conductive materials include: a carbon material such as carbon paper, carbon felt, carbon cloth, and an activated carbon sheet; and a metal material such as aluminum, copper, stainless steel, nickel, and titanium.

More particularly, the negative electrode 6 according to the present embodiment includes an electrically conductive sheet supporting microorganisms. The electrically conductive sheet may be at least one kind selected from the group consisting of an electrically conductive porous sheet, an electrically conductive woven sheet, and an electrically conductive nonwoven sheet. The electrically conductive sheet may also be a stacked body including a plurality of sheets stacked on one another. The negative electrode 6 including the electrically conductive sheet having a plurality of pores facilitates the transfer of hydrogen ions generated by a local cell reaction described below toward the ion permeable film 7, so as to promote the oxygen reduction reaction. The electrically conductive sheet used in the negative electrode 6 is preferably provided with continuous spaces (voids) in the thickness direction, which is the stacking direction X of the positive electrode 5, the ion permeable film 7, and the negative electrode 6, in order to improve ion permeability.

The electrically conductive sheet may be a metal plate having a plurality of penetration holes in the thickness direction. A material used for the electrically conductive sheet in the negative electrode 6 may be at least one material selected from the group consisting of: electrically conductive metal such as aluminum, copper, stainless steel, nickel, and titanium; carbon paper; and carbon felt.

The electrically conductive sheet used in the negative electrode 6 may also be an electrically conductive body having porosity which can be used in the positive electrode 5. The negative electrode 6 preferably includes graphite in which graphene layers are arranged along the plane in the direction YZ perpendicular to the stacking direction X of the positive electrode 5, the ion permeable film 7, and the negative electrode 6. The graphene layers arranged as described above can ensure higher electrical conductivity in the direction YZ, perpendicular to the stacking direction X, than in the stacking direction X. Accordingly, electrons generated by the local cell reaction in the negative electrode 6 can easily be transferred to the external circuit, so as to further improve the efficiency of the cell reaction.

The microorganisms supported on the negative electrode 6 may be any kind that can decompose the organic matter contained in the electrolysis solution 4, and are preferably anaerobic microorganisms not requiring oxygen for propagation, for example. Anaerobic microorganisms do not require air for oxidative decomposition of the organic matter contained in the electrolysis solution 4. Thus, the amount of electric power necessary to supply air can greatly be reduced. Further, since free energy gained by the microorganisms is small, the amount of sludge produced can be reduced.

The negative electrode 6 preferably holds electricity-producing bacteria as anaerobic microorganisms. Specific examples of electricity-producing bacteria include Geobacter, Shewanella, Aeromonas, Geothrix, and Saccharomyces.

A biofilm including anaerobic microorganisms may be placed and fixed onto the negative electrode 6 so that the anaerobic microorganisms are held by the negative electrode 6. A biofilm is, in general, a three-dimensional structure including a microbial colony and an extracellular polymeric substance (EPS) that the microbial colony produces. The anaerobic microorganisms are not necessarily held by the negative electrode 6 via the biofilm. The anaerobic microorganisms may be held not only on the surface but also the inside of the negative electrode 6.

The negative electrode 6 according to the present embodiment may be modified with an electron transport mediator molecule. Alternatively, the electrolysis solution 4 held in the supply-drain compartment 1 may include an electron transport mediator molecule. The presence of the molecule can promote the transfer of the electrons from the anaerobic microorganisms to the negative electrode 6, so as to implement the liquid treatment more efficiently.

More particularly, the communication of the electrons between the negative electrode 6 and cells or a terminal electron acceptor is implemented by a metabolism mechanism of the anaerobic microorganisms. The mediator molecule introduced into the electrolysis solution 4 serves as a terminal electron acceptor and transfers the received electrons to the negative electrode 6. Accordingly, the oxidative decomposition rate of the organic matter in the electrolysis solution 4 can be increased. An example of such an electron transport mediator molecule may be, but not limited to, at least one material selected from the group consisting of neutral red, anthraquinone-2,6-disulfonate (AQDS), thionine, potassium ferricyanide, and methyl viologen.

The following is an example of the reaction caused in the negative electrode 6:

$$[\text{Equation 5}] \quad C_6H_{12}O_6 + 6H_2O \rightarrow 6CO_2 + 24H^+ + 24e^-$$

As expressed by Equation 5, the negative electrode 6 in the microbial fuel cell system 100 according to the present embodiment decomposes the organic matter due to the catalysis of the electricity-producing bacteria supported on the negative electrode 6, so as to produce carbon dioxide, hydrogen ions, and electrons. The negative electrode 6 can treat the organic matter contained in the electrolysis solution 4 due to the reaction expressed as Equation 5.

(Ion permeable film)

The microbial fuel cell system 100 according to the present embodiment further includes the ion permeable film 7 arranged between the negative electrode 6 and the positive electrode 5 and at least permeable to hydrogen ions. As shown in Fig. 1, the negative electrode 6 is separated from the positive electrode 5 with the ion permeable film 7 interposed therebetween. The ion permeable film 7 functions to transfer the hydrogen ions generated in the negative electrode 6 toward the positive electrode 5.

The ion permeable film 7 includes a material permeable to hydrogen ions. Specific examples thereof include a cation exchange membrane, an anion exchange membrane, nonwoven fabric, a glass fiber film, and filter paper.

More particularly, the ion permeable film 7 may be an ion exchange membrane including ion exchange resin. Examples of ion exchange resin include Nafion (registered trademark) (available from DuPont Company), and Flemion (registered trademark) and Selemion (registered trademark) (available from Asahi Glass Co., Ltd.).

The ion permeable film 7 may also be a porous membrane having pores permeable to hydrogen ions. For example, the ion permeable film 7 may be a sheet having spaces (voids) through which hydrogen ions move between the negative electrode 6 and the positive electrode 5. The ion permeable film 7 preferably includes at least one kind selected from the group consisting of a porous sheet, a woven sheet, and a nonwoven sheet. Alternatively, the ion permeable film 7 may be at least one kind selected from the group consisting of a glass fiber membrane, a synthetic fiber membrane, and a plastic nonwoven fabric, or may be a stacked body including a plurality of these membranes stacked on one another. The porous sheet having a plurality of pores as described above allows the hydrogen ions to easily pass therethrough. The pores in the ion permeable film 7 may have any diameter that can transfer the hydrogen ions from the negative electrode 6 to the positive electrode 5.

As described above, the ion permeable film 7 functions to permeate and transfer the hydrogen ions generated in the negative electrode 6 toward the positive electrode 5. When the negative electrode 6 is not in contact with the positive electrode 5 but located close to the positive electrode 5, the hydrogen ions can be transferred from the negative electrode 6 to the positive electrode 5. The microbial fuel cell system 100 according to the present embodiment thus does not necessarily include the ion permeable film 7. However, the ion permeable film 7 is preferably provided so as to facilitate the transfer of the hydrogen ions more efficiently from the negative electrode 6 to the positive electrode 5 to improve the output performance. A gap may be provided between the positive electrode 5 and the ion permeable film 7, and a gap may be provided between the negative electrode 6 and the ion permeable film 7.

The effects of the microbial fuel cell system 100 according to the present embodiment are described below. The electrons generated in the negative electrode 6 are introduced into the positive electrode 5 through the external circuit 8, as described above. The hydrogen ions generated in the negative electrode 6 and flowing into the electrolysis solution 4 are transferred through the ion permeable film 7 and flow into the electrolysis solution 4 toward the positive electrode 5. The microbial fuel cell system 100 generates electric power due to current generated in the external circuit 8 by the transfer of the electrons from the negative electrode 6 to the positive electrode 5.

More particularly, when the positive electrode 5, the negative electrode 6, and the ion permeable film 7 are soaked in the electrolysis solution 4, the gas diffusion layer 53 of the positive electrode 5, the ion permeable film 7, and the negative electrode 6 are impregnated with the electrolysis solution 4, and at least part of the surface 51 of the water-repellent layer 52 is exposed to the gas phase 10.

When the microbial fuel cell system 100 is in operation, the electrolysis solution 4 containing the organic matter is supplied to the negative electrode 6, and the air or oxygen is supplied to the positive electrode 5. The positive electrode 5 permeates the oxygen through the water-repellent layer 52 and diffuses in the gas diffusion layer 53. The negative electrode 6 generates the hydrogen ions and electrons from the organic matter contained in the electrolysis solution 4 due to the catalysis of the microorganisms. The generated hydrogen ions are transferred through the ion permeable film 7 toward the positive electrode 5. The generated electrons are transferred through the electrically conductive sheet of the negative electrode 6 to the external circuit 8, and further transferred from the external circuit 8 to the gas diffusion layer 53 of the positive electrode 5. The hydrogen ions and electrons transferred are bonded to the oxygen due to the reaction of the catalyst supported on the gas diffusion layer 53, so as to turn into water to be consumed.

As described above, the surface of the positive electrode 5 excluding the part exposed to the gas phase 10 holds the nitrifying bacteria. The nitrifying bacteria oxidize a nitrogen-containing compound due to the oxygen diffused in the gas diffusion layer 53, so as to generate nitrite ions or nitrate ions. The denitrifying bacteria held in at least one of the surface of the positive electrode 5 excluding the part exposed to the gas phase 10 and the electrolysis solution 4 generate nitrogen by reacting the hydrogen ions transferred to the positive electrode 5 with the nitrite ions or the nitrate ions.

According to the microbial fuel cell system 100, the nitrogen-containing compound contained in the electrolysis solution 4 can be removed in a manner such that the nitrogen-containing compound turns into nitrogen, water, and hydroxide ions due to the metabolism of the nitrifying bacteria and the denitrifying bacteria. Further, the organic matter contained in the electrolysis solution 4 can be removed in a manner such that the organic matter turns into the hydrogen ions, electrons, and carbon dioxide due to the metabolism of the microorganisms supported on the negative electrode 6.

The microbial fuel cell system 100 preferably further includes a current controller 9 for controlling a current value between the negative electrode 6 and the positive electrode 5. The current controller 9 may be connected to the external circuit 8, as shown in Fig. 1. The current controller 9 controls the amount of current flowing through the positive electrode 5 and the negative electrode 6 in the microbial fuel cell system 100.

When the amount of current is controlled by the current controller 9, the concentration of the hydrogen ions (pH) contained in the electrolysis solution 4 can be controlled. Accordingly, the pH of the electrolysis solution 4 can be adjusted to an appropriate pH suitable for the power generation, the nitrifying reaction, and the denitrifying reaction in the microbial fuel cell system 100. The denitrifying reaction is caused at an optional pH. However, $N_2O$ is produced as a by-product when the pH is less than 7.3. The current controller 9 thus preferably controls the pH of the electrolysis solution 4 present around the positive electrode 5 to keep 7.3 or greater.

As described above, the microbial fuel cell system 100 according to the present embodiment includes the supply-drain compartment 1 to which the electrolysis solution 4 is supplied and from which the electrolysis solution 4 is drained. The microbial fuel cell system 100 further includes the negative electrode 6 soaked in the electrolysis solution 4 and holding the electricity-producing bacteria on the surface thereof, and the positive electrode 5 soaked in the electrolysis solution 4, including at least a part exposed to the gas phase 10, and holding the nitrifying bacteria on the surface excluding the part exposed to the gas phase 10. At least one of the surface of the positive electrode 5 excluding the part exposed to the gas phase 10 and the electrolysis solution 4 holds denitrifying bacteria, wherein the denitrifying bacteria held in the electrolysis solution 4 are collected around the positive electrode 5. Thus, as shown in Fig. 2, the microbial fuel cell system 100 consumes the oxygen supplied from the one surface 51 in the positive electrode 5 and the first region 401 closer to the positive electrode 5 due to the reactions expressed as Equation 1 and Equation 2. Accordingly, the nitrifying reaction due to the nitrifying bacteria as aerobic microorganisms and the denitrifying reaction due to the denitrifying bacteria as anaerobic microorganisms in the positive electrode 5, and the reaction by the organic matter treatment due to the electricity-producing bacteria as anaerobic microorganisms in the negative electrode 6, can be induced in a single tank.

The nitrifying reaction and the denitrifying reaction in the positive electrode 5 are induced independently of the reaction by the organic matter treatment in the negative electrode 6. Since the amount of the organic matter treated in the microbial fuel cell system 100 does not depend on the organic matter treatment in the denitrification, as compared with the conventional case, the amount of the organic matter treated is not limited to the amount of nitrogen contained in the electrolysis solution 4 as a liquid to be treated.

[Second embodiment]

A microbial fuel cell system according to a second embodiment will be described in detail below. The same elements as in the first embodiment are designated by the same reference numerals, and explanations thereof are not repeated below.

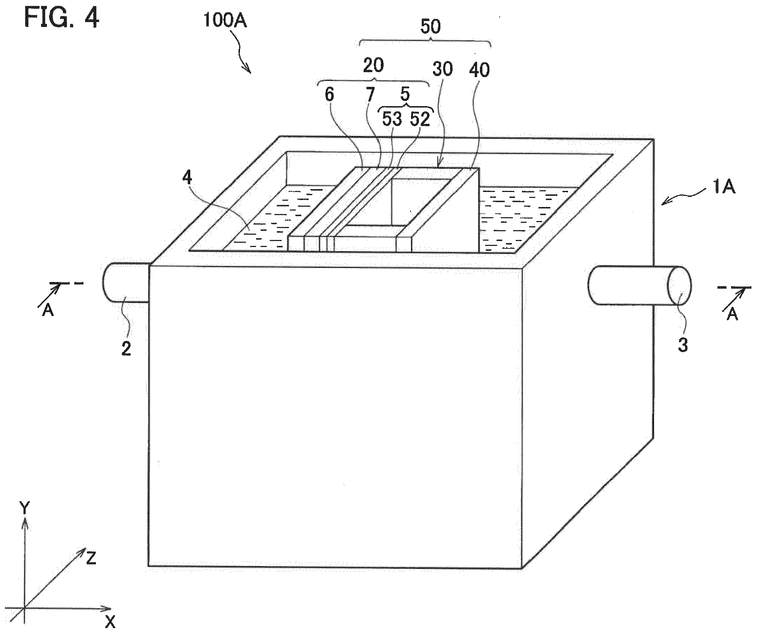

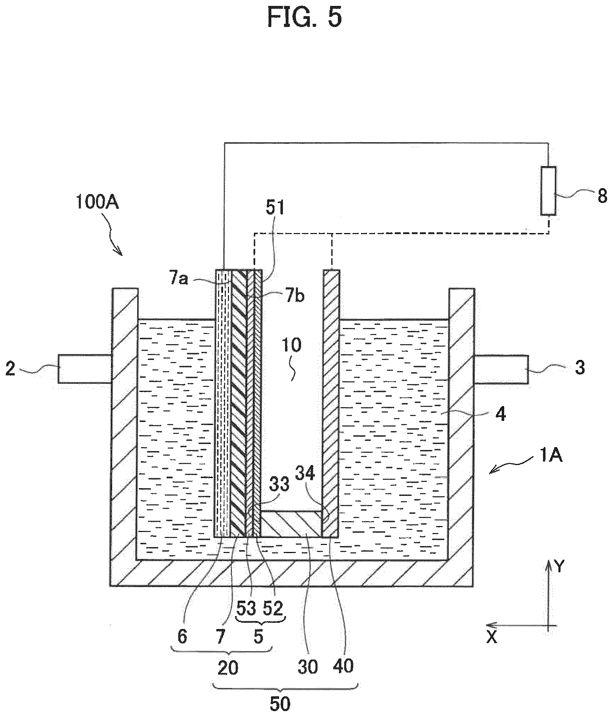

As shown in Fig. 4 and Fig. 5, the microbial fuel cell system 100A according to the present embodiment includes a supply-drain compartment 1A for keeping the electrolysis solution 4, the negative electrode 6 holding electricity-producing bacteria on the surface thereof, and the positive electrode 5 including at least a part exposed to the gas phase 10 and holding nitrifying bacteria on the surface thereof, as in the case of the first embodiment. The positive electrode 5, the negative electrode 6, and the ion permeable film 7 are stacked on one another to form an electrode assembly 20. The microbial fuel cell system 100A is configured such that the negative electrode 6 is in contact with one surface 7a of the ion permeable film 7, and the positive electrode 5 is in contact with the other surface 7b opposite to the one surface 7a of the ion permeable film 7. The gas diffusion layer 53 of the positive electrode 5 is in contact with the ion permeable film 7, and the water-repellent layer 52 of the positive electrode 5 is exposed to the gas phase 10.

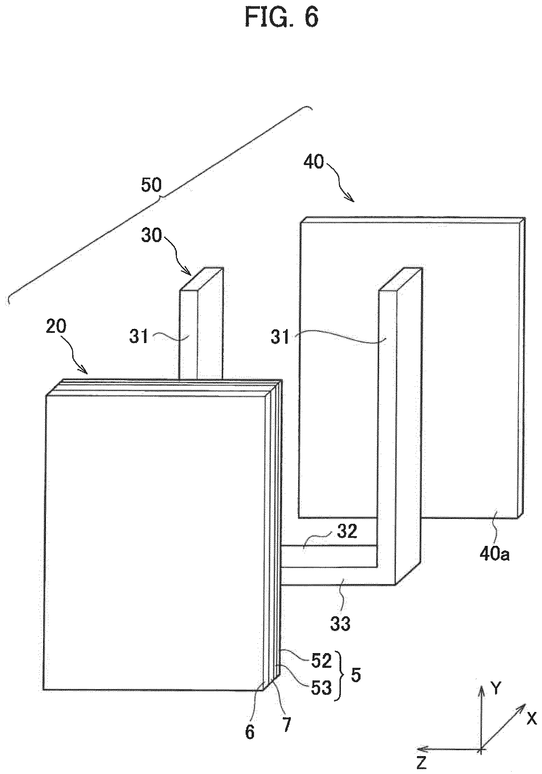

As shown in Fig. 6, the electrode assembly 20 is placed on a cassette substrate 30. The cassette substrate 30 is a U-shaped frame member open on the upper side and placed along the periphery of the surface 51 of the positive electrode 5. In particular, the cassette substrate 30 serves as a frame member in which two first pillar-shaped members 31 are connected at the bottom ends to a second pillar-shaped member 32. As shown in Fig. 6, a side surface 33 of the cassette substrate 30 is joined to the periphery of the surface 51 of the positive electrode 5, and a side surface 34 on the opposite side of the side surface 33 is joined to the periphery of a surface 40a of a plate member 40.

As shown in Fig. 5, a fuel cell unit 50 including the electrode assembly 20, the cassette substrate 30, and the plate member 40 assembled together is arranged in the supply-drain compartment 1A such that the gas phase 10 communicating with the atmosphere is provided inside the fuel cell unit 50. The electrolysis solution 4 as a liquid to be treated is kept in the supply-drain compartment 1A. The positive electrode 5, the negative electrode 6, and the ion permeable film 7 are impregnated with the electrolysis solution 4.

The positive electrode 5 includes the water-repellent layer 52 having water repellency, as described above, and the plate member 40 is made of a flat plate impermeable to the electrolysis solution 4. The inside of the cassette substrate 30 is therefore isolated from the electrolysis solution 4 kept in the supply-drain compartment 1A, so that the inside space defined by the electrode assembly 20, the cassette substrate 30, and the plate member 40 serves as the gas phase 10. The microbial fuel cell system 100A is configured such that the gas phase 10 is open to the outside air, or air is externally supplied to the gas phase 10 via a pump, for example. As shown in Fig. 5, the positive electrode 5 and the negative electrode 6 are each electrically connected to the external circuit 8.

According to the first embodiment, the positive electrode 5 is joined to the side surface of the supply-drain compartment 1, and the surface 51 of the positive electrode 5 is exposed to the gas phase 10. The microbial fuel cell system is not limited to the structure described in the first embodiment and may use the fuel cell unit 50 including the electrode assembly 20, the cassette substrate 30, and the plate member 40 assembled together as described in the second embodiment. The fuel cell unit 50 can induce the nitrifying reaction due to the nitrifying bacteria as aerobic microorganisms and the denitrifying reaction due to the denitrifying bacteria as anaerobic microorganisms in the positive electrode 5, and induce the reaction by the organic matter treatment due to the electricity-producing bacteria as anaerobic microorganisms in the negative electrode 6. Further, the microbial fuel cell system according to the present embodiment can include a plurality of fuel cell units 50 in one supply-drain compartment 1A. Such a microbial fuel cell system can increase the rate of contact between the electrolysis solution 4 and the positive and negative electrodes 5 and 6, so as to further improve the efficiency of purifying the organic matter and the nitrogen-containing compound.

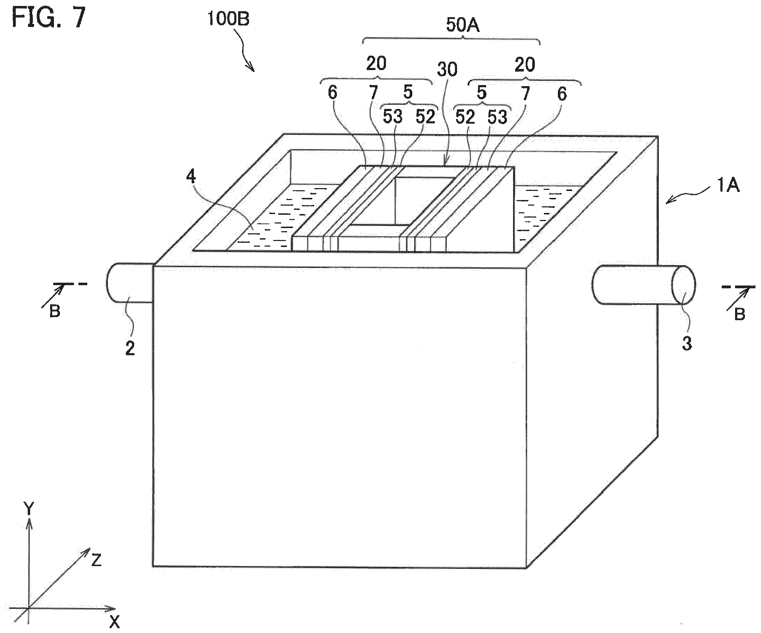

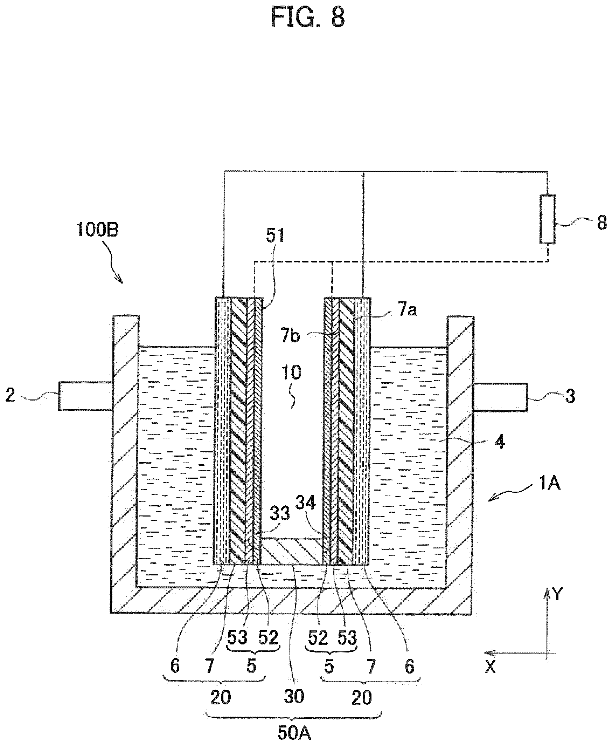

The microbial fuel cell system 100A shown in Fig. 4 and Fig. 5 has a structure in which the side surface 33 of the cassette substrate 30 is joined to the positive electrode 5, and the side surface 34 on the opposite side of the side surface 33 is joined to the plate member 40, so as to provide the gas phase 10 therein. However, the present embodiment is not limited only to this structure. For example, as illustrated by a microbial fuel cell system 100B shown in Fig. 7 and Fig. 8, two electrode assemblies 20 are assembled together via the cassette substrate 30 to provide a fuel cell unit 50A. The microbial fuel cell system 100B is configured such that the side surface 33 and the side surface 34 of the cassette substrate 30 are joined to the peripheries of the surfaces 51 of the respective positive electrodes 5, so as to prevent the electrolysis solution 4 from leaking into the inside of the cassette substrate 30 from the peripheries of the surfaces 51 of the respective positive electrodes 5. The respective positive electrodes 5 and negative electrodes 6 in the two electrode assemblies 20 are each electrically connected to the external circuit 8. The use of the fuel cell unit 50A including the two electrode assemblies 20 can increase the rate of contact between the electrolysis solution 4 and the positive and negative electrodes 5 and 6, so as to further improve the efficiency of purifying the organic matter and the nitrogen-containing compound.

As described above, the cell reaction is promoted when the hydrogen ions can be transferred from the negative electrode 6 to the positive electrode 5, so as to reduce the concentration of the organic matter and the nitrogen-containing compound contained in the electrolysis solution 4. Thus, in the microbial fuel cell systems 100A and 100B shown in Fig. 5 and Fig. 8, the negative electrode 6 is not necessarily in contact with the ion permeable film 7, and a gap may be provided between the negative electrode 6 and the ion permeable film 7.

EXAMPLES

The present embodiment is described in more detail below with reference to examples, but is not limited only to these examples. The following example represents a reference example.

In this example, the supply-drain compartment 1 having a volume of 0.3 L, the positive electrode 5 made of carbon paper having water repellency, the negative electrode 6 made of carbon felt, and the ion permeable film 7 made of polyolefin nonwoven fabric were used. The microbial fuel cell system shown in Fig. 1 was thus prepared. A carbon alloy catalyst doped with iron and nitrogen serving as an oxygen reduction catalyst was supported on the positive electrode 5. Further, nitrifying bacteria were held on the surface of the positive electrode 5, denitrifying bacteria were held on the surface of the positive electrode 5 excluding a part exposed to the gas phase 10 and also in the electrolysis solution 4, and Geobacter as electricity-producing bacteria were held on the surface of the negative electrode 6.

The air was sent to one surface 51 via a pump so as to supply oxygen to the positive electrode 5.

Artificial sewage containing starch, peptone, and yeast extract was used as the electrolysis solution 4. The concentration of organic matter contained in the electrolysis solution 4 supplied was set to approximately 180 mg/L in terms of a TOC value measured with a total organic carbon analyzer by a combustion catalytic oxidation method. The electrolysis solution 4 was allowed to flow in the supply-drain compartment 1 at 300 mL/day.

In the state in which the microbial fuel cell system 100 was stably driven at a level of power generation of approximately 56 mW/m$^2$, the total nitrogen amount and the total organic carbon amount of each of the electrolysis solution 4 before treatment supplied from the supply port 2 and the electrolysis solution 4 after treatment drained from the drain port 3 were measured. Table 1 shows the measurement results thus obtained. The total nitrogen amount was measured by a persulfate decomposition method. The total organic carbon amount was measured with a total organic carbon analyzer by a combustion catalytic oxidation method.

[Table 1]

|  | Before Treatment | After Treatment |
|---|---|---|
| Total Nitrogen Amount (mg/L) | 15 | 2.6 |
| Total Organic Carbon Amount (mg/L) | 180 | 32.4 |

As shown in Table 1, the total nitrogen amount in the electrolysis solution 4 was reduced by 12.4 mg/L from 15 mg/L before treatment to result in 2.6 mg/L. The total organic carbon amount was reduced by 147.6 mg/L from 180 mg/L before treatment to result in 32.4 mg/L.

When the organic carbon treated in association with the nitrogen treatment is all glucose, the glucose per mole donates 24 mol of H$^+$ in the same manner as the reaction expressed as Equation 5, and 5 mol of H$^+$ is consumed in the denitrification of 1 mol of NO$_3^-$. In addition, the reduced amount of nitrogen in the electrolysis solution 4, which is 12.4 mg/L, is 0.886 mmol/L in terms of a molar concentration of nitric acid. The glucose treated in association with the nitrate-nitrogen treatment in which the reduced amount of nitrogen is 12.4 mg/L is 0.185 mmol/L. This denotes that 13.4 mg/L on an organic carbon basis has been treated.

As described above, the total organic carbon amount was reduced by 147.6 mg/L, which is approximately 10 times as high as the amount of the organic carbon reduced in association with the nitrogen treatment.

Accordingly, the microbial fuel cell system according to the embodiments can treat organic matter in a single tank efficiently regardless of the amount of nitrogen contained in a liquid to be treated. Further, the microbial fuel cell system can generates electric power in association with the treatment, nitrification, and denitrification of the organic matter.

The application claims priority of the 11th of March 2015 (Japanese Patent Application No. P2015-048232).

The microbial fuel cell system according to the present invention can simultaneously treat, nitrify, and denitrify organic matter contained in a liquid to be treated with no limitation by the amount of nitrogen contained in the liquid. The microbial fuel cell system can also generate electric power in association with the treatment, nitrification, and denitrification of the organic matter.

REFERENCE SIGNS LIST

| 1 | SUPPLY-DRAIN COMPARTMENT |
|---|---|
| 4 | ELECTROLYSIS SOLUTION |
| 5 | POSITIVE ELECTRODE |
| 6 | NEGATIVE ELECTRODE |
| 7 | ION PERMEABLE FILM |
| 9 | CURRENT CONTROLLER |
| 100, 100A, 100B | MICROBIAL FUEL CELL SYSTEM |

Claims

1.  A microbial fuel cell system (100, 100A, 100B) comprising:

a supply-drain compartment (1) to which an electrolysis solution (4) is supplied and from which the electrolysis solution (4) is drained;
a negative electrode (6) soaked in the electrolysis solution (4) and holding electricity-producing bacteria on a surface thereof; and
a positive electrode (5) soaked in the electrolysis solution (4), including at least a part exposed to a gas phase (10), and holding nitrifying bacteria on a surface thereof excluding the part exposed to the gas phase (10), the positive electrode (5) being a gas diffusion electrode including a water-repellent layer (52) and a gas diffusion layer (53) in contact with the water-repellent layer (52), wherein the water-repellent layer (52) is in contact with the gas phase (10),

wherein at least one of the surface of the positive electrode (5) excluding the part exposed to the gas phase (10) and the electrolysis solution (4) holds denitrifying bacteria, and the denitrifying bacteria held in the electrolysis solution (4) are collected around the positive electrode (5).

2. The microbial fuel cell system (100, 100A, 100B) according to claim 1, further comprising a current controller (9) configured to control a current value between the negative electrode (6) and the positive electrode (5).

3. The microbial fuel cell system (100, 100A, 100B) according to claim 1 or 2, further comprising an ion permeable film (7) arranged between the negative electrode (6) and the positive electrode (5) and at least permeable to hydrogen ions.

## Patentansprüche

1. Mikrobielles Brennstoffzellensystem (100, 100A, 100B), umfassend:

eine Zu- und Abführkammer (1), der eine Elektrolyselösung (4) zugeführt wird und von der die Elektrolyselösung (4) abgeführt wird;
eine Negativelektrode (6), welche von der Elektrolyselösung (4) durchtränkt ist und stromerzeugende Bakterien auf einer Oberfläche davon aufweist; und
eine Positivelektrode (5), welche von der Elektrolyselösung (4) durchtränkt ist, einschließend mindestens einen Teil, der einer Gasphase (10) ausgesetzt ist, und nitrifizierende Bakterien auf einer Oberfläche davon, ausgenommen den der Gasphase (10) ausgesetzten Teil, aufweist, wobei die Positivelektrode (5) eine Gasdiffusionselektrode, einschließend eine wasserabweisende Schicht (52) und eine Gasdiffusionsschicht (53) in Kontakt mit der wasserabweisenden Schicht (52), ist, wobei sich die wasserabweisende Schicht (52) in Kontakt mit der Gasphase (10) befindet,
wobei mindestens eine der Oberfläche der Positivelektrode (5), ausgenommen den der Gasphase (10) ausgesetzten Teil, und der Elektrolyselösung (4) denitrifizierende Bakterien aufweist, und die denitrifizierenden Bakterien, welche die Elektrolyselösung (4) aufweist, um die Positivelektrode (5) angesammelt sind.

2. Mikrobielles Brennstoffzellensystem (100, 100A, 100B) nach Anspruch 1, weiter umfassend einen Stromregler (9), eingerichtet zum Regeln eines Stromwertes zwischen der Negativelektrode (6) und der Positivelektrode (5).

3. Mikrobielles Brennstoffzellensystem (100, 100A, 100B) nach Anspruch 1 oder 2, weiter umfassend einen ionendurchlässigen Film (7), angeordnet zwischen der Negativelektrode (6) und der Positivelektrode (5) und zumindest durchlässig für Wasserstoffionen.

## Revendications

1. Système de pile à combustible microbienne (100, 100A, 100B) comprenant:

un compartiment alimentation-drain (1) auquel une solution d'électrolyse (4) est fournie et à partir duquel la solution d'électrolyse (4) est drainée;
une électrode négative (6) immergée dans la solution d'électrolyse (4) et détenant des bactéries électrogènes sur une surface de celle-ci; et
une électrode positive (5) immergée dans la solution d'électrolyse (4), comprenant au moins une partie exposée à une phase gazeuse (10), et détenant des bactéries nitrifiantes sur une surface de celle-ci, à l'exclusion de la partie exposée à la phase gazeuse (10), l'électrode positive (5) étant une électrode à diffusion gazeuse comprenant une couche hydrofuge (52) et une couche de diffusion gazeuse (53) en contact avec la couche hydrofuge (52), dans laquelle la couche hydrofuge (52) est en contact avec la phase gazeuse (10),
dans lequel au moins l'une de la surface de l'électrode positive (5) à l'exclusion de la partie exposée à la phase gazeuse (10) et la solution d'électrolyse (4) détient des bactéries dénitrifiantes, et les bactéries dénitrifiantes détenues dans la solution d'électrolyse (4) sont collectées autour de l'électrode positive (5).

**2.** Système de pile à combustible microbienne (100, 100A, 100B) selon la revendication 1, comprenant en outre un contrôleur de courant (9) configuré pour contrôler la valeur du courant entre l'électrode négative (6) et l'électrode positive (5).

**3.** Système de pile à combustible microbienne (100, 100A, 100B) selon la revendication 1 ou 2, comprenant en outre un film perméable aux ions (7) agencé entre l'électrode négative (6) et l'électrode positive (5) et au moins perméable aux ions hydrogène.

FIG. 1

# FIG. 2

# FIG. 3

EP 3 270 451 B1

FIG. 4

FIG. 5

# FIG. 6

FIG. 7

100B

50A

20    30    20

6   7   5        5   7   6
   53  52      52  53

4

1A

B          B

2          3

Y
Z
X

EP 3 270 451 B1

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10085787 B
- US 2010304226 A1
- JP P2015048232 B

**Non-patent literature cited in the description**

- *Water Research,* 2010, vol. 44 (9), 2970-2980